# EUROPÄISCHE PATENTSCHRIFT

(11) **EP 3 435 275 B1**
(45) Veröffentlichungstag und Bekanntmachung des Hinweises auf die Patenterteilung: **22.04.2020**
(21) Anmeldenummer: 18000617.3
(22) Anmeldetag: 20.07.2018
(51) Int. Cl.: G06F 21/85, G08B 13/14, G08B 25/08

(54) **ÜBERWACHUNGSVORRICHTUNG**
MONITORING DEVICE
DISPOSITIF DE SURVEILLANCE

(30) Priorität: 27.07.2017 DE 102017007146
(43) Veröffentlichungstag der Anmeldung: 30.01.2019
(73) Patentinhaber: Westinghouse Electric Germany GmbH, 68167 Mannheim (DE)
(72) Erfinder: Spatz, Christian, 67227 Frankenthal (DE); Dein, Horst, 69518 Abtsteinach (DE); Weber, Andreas, 69120 Heidelberg (DE)
(74) Vertreter: Eickmeyer, Dietmar

(56) Entgegenhaltungen:
- CN-U- 202 887 353
- DE-U1-202007 004 387
- GB-A- 2 527 504

## Beschreibung

Die Erfindung betrifft eine Überwachungsvorrichtung für Kommunikationsschnittstellen eines Datenverarbeitungsgerätes.

Es ist allgemein bekannt, dass in der Informationstechnik (IT) zur Kommunikation zwischen zwei oder mehreren Geräten häufig standardisierte Kommunikationsschnittstellen eingesetzt werden. Neben einer möglichen drahtlosen Kommunikation, zum Beispiel durch ein Wireless Local Area Network (WLAN), kommt auch eine kabelgebundene Kommunikation zwischen den Geräten in Betracht. Die Verbindung mit Kabeln wird vor allem dann bevorzugt, wenn die Sicherheitsanforderungen an die Kommunikation zwischen den Geräten steigen, beispielsweise weil die Daten bei der Kommunikation besonders geschützt werden müssen, oder weil die Geräte selbst eine sicherheitsrelevante Funktion haben, beispielsweise Steuerungsvorrichtungen in Industrieanlagen oder Kernkraftwerken.

Beispiele für kabelgebundene standardisierte Kommunikationsschnittstellen sind das Local Area Network (LAN), der Universal Serial Bus (USB), die serielle COM-Schnittstelle, die Firewire, das Ethernet oder das Multi Point Interface (MPI), die in der Regel auch standardisierte Schnittstellenverbindungen in Form von Steckern und Buchsen aufweisen.

Eine Sicherheitsanforderung an die Kommunikation zwischen den Geräten in einem IT-System kann auch die Überprüfung der Kommunikation zwischen den Geräten auf Manipulationen beinhalten. Dazu sind softwarebasierte Überwachungsprogramme bekannt, welche auf einem oder mehreren Geräten des IT-Systems installiert sind, und die die zwischen den Geräten ausgetauschten Daten, die Datenmengen oder die Datenströme auf Manipulationen überwachen. Diese Überwachungsprogramme analysieren insbesondere auch diejenigen Daten die über die standardisierten Kommunikationsschnittstellen aus dem Gerät hinausgehen oder hereinkommen. Insgesamt soll im Bereich der IT-Sicherheit verhindert werden, dass ein System manipuliert und unzulässig verändert werden kann. Nachteilig bei den vorstehenden Überwachungssystemen ist es, dass zwar die Datenströme überwacht werden, die Geräte oder die Geräteverbindungen selbst jedoch nicht. Weiterer Stand der Technik ist die britische Patentanmeldung GB2527504.

Ausgehend von diesem Stand der Technik ist es die Aufgabe der Erfindung, eine Überwachungsvorrichtung für Kommunikationsschnittstellen eines Datenverarbeitungsgeräts anzugeben, mit dem eine Manipulation der Verwendung der Kommunikationsschnittstelle erkennbar ist.

Die Aufgabe wird gelöst durch eine Überwachungsvorrichtung für wenigstens eine Kommunikationsschnittstelle eines Datenverarbeitungsgerätes, wobei für jede der wenigstens einen zu überwachenden Kommunikationsschnittstelle
- ein erster Spannungsversorgungsanschluss, ein Masseanschluss und ein Adapterelement mit einem Schnittstellenverbindungselement vorgesehen sind,
- zwischen dem Spannungsversorgungsanschluss und dem Masseanschluss ein Signalerzeugungselement zwischengeschaltet ist,
- der Masseanschluss mit einem Masseanschlusselement im Schnittstellenverbindungselement elektrisch verbunden ist,
- das Schnittstellenverbindungselement so ausgestaltet ist, dass das Masseanschlusselement mit der Masse der Kommunikationsschnittstelle verbunden ist, wenn das Schnittstellenverbindungselement in die dafür vorgesehen Kommunikationsschnittstelle eingesteckt ist,
- durch das Signalerzeugungselement ein Überwachungssignal dann erzeugt ist, wenn eine Spannung am Spannungsversorgungsanschluss anliegt und das Schnittstellenverbindungselement in die Kommunikationsschnittstelle eingesteckt ist, und
- das Überwachungssignal an einem Überwachungssignalanschluss der überwachten Kommunikationsschnittstelle bereitgestellt ist.

Die Grundidee der Erfindung besteht darin, je ein Schnittstellenverbindungselement eines Adapterelements mit einer zu überwachenden Kommunikationsschnittstelle eines Datenverarbeitungsgeräts zu verbinden. Das Schnittstellenverbindungselement kann dann nicht mehr von der Kommunikationsschnittstelle entfernt werden, ohne dass diese Manipulation detektierbar ist. Damit ist jede Manipulation der Verwendung der Kommunikationsschnittstelle erkennbar. Wenn die Überwachungsvorrichtung durch das Schnittstellenverbindungselement mit der zu überwachenden Kommunikationsschnittstelle verbunden ist, ist auch das Masseanschlusselement mit der Masse der Kombinationsschnittstelle verbunden. Durch den nun ermöglichten Stromfluss zwischen einer am Spannungsversorgungsanschluss anliegenden Spannung und der Masse der Kommunikationsschnittstelle wird ein Überwachungssignal generiert. Dieses Überwachungssignal wird an eine Meldeanlage, beispielsweise eine Einbruchmeldeanlage (EMA), übermittelt. Das eingesteckte Adapterelement verhindert auch den Anschluss eines anderen Geräts an diese Kommunikationsschnittstelle, beispielsweise um aus der Datenverarbeitungsanlage unberechtigterweise Daten auszulesen. Wird das Adapterelement aus der Kombinationsschnittstelle entfernt, wird kein Überwachungssignal mehr erzeugt, beziehungsweise das Überwachungssignal fällt weg. Das Ausbleiben des betreffenden Überwachungssignals ist durch die EMA detektierbar und als Manipulation der Schnittstelle interpretierbar. Die Überwachungsvorrichtung erkennt also die Manipulation oder Veränderung der Verwendung der Kommunikationsschnittstelle, indem das Abziehen des Schnittstellenverbindungselements des Adapterelements aus einem Stecker oder einer Buchse der Kommunikationsschnittstelle überwacht ist. Auch ein Spannungsverlust durch ein Durchtrennen einer Spannungsversorgungsleitung, zum Beispiel in der Kommunikationsschnittstelle im Datenverarbeitungsgerät, ist mit der erfindungsgemäßen Überwachungsvorrichtung detektierbar. Die Kommunikationsschnittstelle verhindert in dieser Ausgestaltung die Benutzung einer sonst nicht genutzten Kommunikationsschnittstelle.

In einer einfachen Ausgestaltung weist die Erfindung gemäß Überwachungsvorrichtung lediglich die Überwachungsmöglichkeit für eine Kombinationsschnittstelle auf. Dann sind alle erfindungsgemäß benötigten Bauelemente beispielsweise im Adapterelement untergebracht. Eine vorteilhafte Ausgestaltung des Erfindungsgegenstands ist darin zu sehen, dass eine Überwachungsvorrichtung eine Vielzahl von Adapterelementen aufweist, die eine entsprechende Anzahl von Kommunikationsschnittstellen überwacht.

Eine erfindungsgemäße Überwachungsvorrichtung ist auch dadurch gekennzeichnet, dass das Signalerzeugungselement eine Leuchtdiode oder ein Schallerzeuger ist, und dass das Überwachungssignal ein Schall- oder Lichtsignal ist. Bei dieser Ausgestaltung wird das Überwachungssignal als nicht-elektrisches Signal generiert, wodurch eine elektrische Beeinflussung des Überwachungssignals nicht möglich ist.

Eine andere Möglichkeit das Überwachungssignal von dem Stromkreis der Signalerzeugung zu entkoppeln besteht darin, dass das Signalerzeugungselement ein Optokoppler oder ein elektronisches Koppelelement ist, und dass das Überwachungssignal ein elektrisches Signal ist, das am ersten Überwachungssignalanschluss verfügbar ist. Auf diese Weise ist der Stromkreis für die Signalerzeugung von dem des Überwachungssignals galvanisch getrennt.

Eine vorteilhafte Weiterbildung der Überwachungsvorrichtung sieht vor, dass der Spannungsversorgungsanschluss mit einem Spannungsanschlusselement im Schnittstellenverbindungselement elektrisch verbunden ist, und dass das Schnittstellenverbindungselement so ausgestaltet ist, dass das Spannungsanschlusselement mit der Spannungsversorgung der Kommunikationsschnittstelle verbunden ist, wenn das Schnittstellenverbindungselement in die dafür vorgesehene Kommunikationsschnittstelle eingesteckt ist.

Auf diese Weise ist die Spannungsversorgung für eine der zu überwachenden Kommunikationsschnittstelle von dieser betreffenden Schnittstelle selbst sichergestellt. Auf diese Weise entfällt die sonst notwendige separate Spannungs- bzw. Stromversorgung und zudem sind bestimmte elektrische Probleme beim Anschluss von Stromverbrauchern an Spannungs- bzw. Masseanschlüsse unterschiedlicher Stromkreise von vornherein vermieden.

Eine andere erfindungsgemäße Spannungsversorgung der Überwachungsvorrichtung ist dadurch gekennzeichnet, dass der Spannungsversorgungsanschluss der zu überwachenden Kommunikationsschnittstelle mit einer externen Spannungsquelle, einer Batterie, oder einem Spannungsversorgungsgerät als Spannungsversorgung angeschlossen ist. Auf diese Weise ist eine einheitliche Spannungsversorgung aller Spannungsversorgungsanschlüsse der Adapterelemente gewährleistet. Überwachung erfolgt dann ausschließlich über die Trennung der Verbindung zwischen dem Masseanschlusselement und der Masse der Kommunikationsschnittstelle durch Abziehen des Adapterelements der betreffenden Kommunikationsschnittstelle.

Eine erfindungsgemäße Ausgestaltung der Überwachungsvorrichtung sieht vor, dass zwischen dem Spannungsversorgungsanschluss und der Spannungsversorgung ein Sabotageerkennungselement zwischengeschaltet ist. Durch das Sabotageerkennungselement sind Manipulationsversuche an einem der Adapterelemente, oder an einem separaten Gehäuse, in dem zum Beispiel die Signalerzeugungselemente verschiedene Adapter gemeinsam angeordnet sind, erkennbar. Ist durch das Sabotageerkennungselement eine Manipulation erkannt, ist ein Stromkreis zu einem Signalerzeugungselement unterbrochen, so dass kein Überwachungssignal mehr an diesem Sinnerzeugungselement erzeugt ist. Der Wegfall des Überwachungssignals ist entsprechend als Sabotageversuch interpretierbar.

Ein Sabotageerkennungselement ist so ausgestaltbar, dass der erste Spannungsversorgungsanschluss, der Masseanschluss und das Signalerzeugungselement in einem Gehäuse angeordnet sind, und das Sabotageerkennungselement eine Abhebekontakt ist, durch den die Spannungsversorgung unterbrochen ist, wenn das überwachte Gehäuse geöffnet ist.

In einer erfindungsgemäßen Weiterbildung ist es vorgesehen, dass das Schnittstellenverbindungselement ein Stecker oder eine Buchse einer USB-, einer LAN-, einer COM-, einer SD-, einer Firewire- oder einer MPI-Schnittstelle oder einer anderen Standardkommunikationsschnittstelle ist. Als Standardkommunikationsschnittstelle kommen alle Schnittstellen in Betracht, die für Datenverarbeitungsanlagen mit entsprechenden Protokollen und/oder durch entsprechende Steckverbindungen vereinheitlicht sind. Hier gibt es eine Vielzahl von Standards, die zum Aus- oder Einlesen von Daten an Datenbearbeitungs-, End- oder Eingabegeräten oder zum Datenaustausch mit anderen Datenabarbeitungsgeräten eingesetzt werden.

Zudem ist die erfindungsgemäße Überwachungsvorrichtung auch dadurch gekennzeichnet, dass das Datenverarbeitungsgerät ein Steuerungsgerät, ein Personal Computer, ein Server oder eine andere Datenverarbeitungsanlage ist. Die Überwachungsvorrichtung ist vorteilhaft an jeder standardisierten Kommunikationsschnittstelle eines Datenbearbeitungsgeräts einsetzbar. Daher ist es möglich, die Überwachungsvorrichtung im Grunde an allen Datenbearbeitungsgeräte einzusetzen, denen Daten gespeichert oder zumindest zeitweise vorhanden sind und damit die Gefahr besteht, dass die dort vorhandenen Daten durch Daten-Einder -Ausgabeschnittstellen auslesbar oder veränderbar sind. Als Datenverarbeitungsgerät kommt so zum Beispiel eine Steuerungseinrichtung eines Prozessleitsystems, Servers von Computernetzwerken, ein Computer oder ein anderes Gerät mit Kommunikationsschnittstellen in Betracht. Solche Datenverarbeitungsgeräte weisen eine Anzahl von Kommunikationsschnittstellen, häufig standardisierte Kommunikationsschnittstellen, wie vorstehend erwähnt oder auch eine serielle COM-, eine Ethernet, eine MPI- Schnittstelle oder andere Schnittstellentypen auf.

Eine Weiterbildung der Überwachungsvorrichtung sieht vor, dass das Überwachungssignal nur erzeugbar ist, wenn die Spannung am Spannungsversorgungsanschluss wenigstens einen vorbestimmten Minimalwert aufweist oder die Spannung einen Wert innerhalb eines vorgebbaren Spannungsbereiches aufweist. Auf diese Weise ist es möglich, auch das erwartete Spannungsniveau der Kommunikationsschnittstelle zu überwachen und festgestellte Abweichungen als Manipulation zu interpretieren und durch Entfall des Überwachungssignals detektierbar zu machen. Derart ist eine Manipulation der Spannungsversorgung überwacht.

Eine weitere vorteilhafte Ausgestaltung der Überwachungsvorrichtung ist dadurch gekennzeichnet, dass wenigstens zwei Kommunikationsschnittstellen überwachbar sind, dass der Spannungsversorgungsanschluss wenigstens einer zu überwachenden Kommunikationsschnittstelle eine Spannungsversorgung aufweist, und dass der Spannungsversorgungsanschluss wenigstens einer anderen zu überwachenden Kommunikationsschnittstelle mit dem Spannungsversorgungsanschluss der Kommunikationsschnittstelle mit der einen Spannungsversorgung elektrisch verbunden ist.

Auf diese Weise sind auch Kombinationsschnittstelle überwachbar, die keine eigene Spannungsversorgung aufweisen. Ein weiterer Vorteil besteht darin, dass nur eine der überwachten Schnittstellen eine Spannungsversorgung aufweisen muss, damit weitere Kombination Schnittstellen überwachbar sind. Die Spannungsversorgung aller Signalerzeugungselemente ist derart sogar durch die Spannungsversorgung einer Kommunikationsschnittstelle mit Spannungsversorgung sichergestellt.

Eine besonders vorteilhafte Ausgestaltung der erfindungsgemäßen Überwachungsvorrichtung sieht vor, dass das Adapterelement ein Schnittstellenverbindungsmittel zum Anschluss eines Verbindungsstücks aufweist, dass das Schnittstellenverbindungsmittel mit dem Schnittstellenverbindungselement so verbunden ist, dass alle Signalleitungen der Kommunikationsschnittstelle, die Schirmung, die Masse und die Spannungsversorgung der Kommunikationsschnittstelle als Schnittstellenanschlüsse am Schnittstellenverbindungsmittel für das Verbindungsstück bereitgestellt sind, dass ein weiteres Signalerzeugungselement zwischen dem Spannungsversorgungsanschluss und einem weiteren Masseanschluss zwischengeschaltet ist, dass der weitere Masseanschluss mit einem weiteren Masseanschlusselement im Adapterelement elektrisch verbunden ist, dass das Adapterelement so ausgestaltet ist, dass das weitere Masseanschlusselement mit der Masse oder der Schirmung der Kommunikationsschnittstelle nur dann verbunden ist, wenn das Schnittstellenverbindungselement in die dafür vorgesehen Kommunikationsschnittstelle und das Verbindungsstück in das Schnittstellenverbindungsmittel eingesteckt sind, dass durch das weitere Signalerzeugungselement ein weiteres Überwachungssignal erzeugt ist, wenn eine Spannung am Spannungsversorgungsanschluss anliegt und das weitere Masseanschlusselement mit dem Masseanschlusselement oder der Schirmung des Adapterelements verbunden ist, und dass das Überwachungssignal an einem weiteren Überwachungssignalanschluss der überwachten Kommunikationsschnittstelle bereitgestellt ist.

Der Grundgedanke bei dieser Ausgestaltungsvariante ist die Möglichkeit auch eine in Benutzung befindliche Kommunikationsschnittstelle eines Datenverarbeitungsgeräts zu überwachen. Hierfür weist das Adapterelement neben einem Schnittstellenverbindungselement auch ein Schnittstellenverbindungsmittel auf, das mit einem Verbindungsstück eines Datenverarbeitungsgerätes, eines Ein- oder Ausgabegeräts, oder einer Verbindungsleitung verbindbar ist. Als Verbindungsstück kommen dabei insbesondere Stecker oder Buchsen von Kommunikationsschnittstellen von Datenbearbeitungsanlagen oder Datenspeichern in Betracht, wie beispielsweise einer USB-, einer LAN-, einer COM-, einer SD-, einer Firewire- oder einer MPI-Schnittstelle oder einer anderen Standardkommunikationsschnittstelle. Auf diese Weise ist das Adapterelement sozusagen kommunikationstechnisch zwischen die Datenverarbeitungsanlage und dem Verbindungsstück zwischengeschaltet, das ansonsten direkt in der Kommunikationsschnittstelle eingesteckt ist. Sowohl das Schnittstellenverbindungselement, als auch das Schnittstellenverbindungsmittel sind dabei mit einem separaten Signalerzeugungselement überwacht. Das bedeutet, dass sowohl das Entfernen des Verbindungsstücks aus dem Schnittstellenverbindungsmittel, als auch das Entfernen des Schnittstellenverbindungselements aus der Kommunikationsschnittstelle durch den Wegfall des entsprechenden Überwachungssignals erkennbar sind.

In einer Weiterbildung der Überwachungsvorrichtung ist es vorgesehen, dass das weitere Masseanschlusselement federnd nachgiebig ausgestaltet ist, dass das Einstecken des Verbindungsstücks in das Schnittstellenverbindungsmittel gegen die Federkräfte des weiteren Masseanschlusselement wirkt, und dass durch das vollständige Einstecken des Verbindungsstücks das weitere Masseanschlusselement so federnd verformt ist, dass das weitere Masseanschlusselement mit dem Masseanschlusselement oder der Schirmung des Adapterelements verbunden ist. Diese Ausgestaltung des Erfindungsgegenstandes ist insbesondere dann besonders vorteilhaft, wenn das Verbindungsstück keine äußere metallische Abschirmung gegen elektronische Einflüsse, eine sogenannte Schirmung, aufweist, wie es beispielsweise bei einer SD- Speicherkarte der Fall ist. Dann ist durch das Einstecken des Verbindungsstücks und durch die Flexibilität des federnd nachgiebigen Bereichs des weiteren Masseanschlusselements dieses gegen die Masse des Adapterelements gedrückt, so dass auch das weitere Masseanschlusselement letztlich mit der Masse der Kommunikationsschnittstelle verbunden ist. In diesem Fall ist auch der Stromkreis für das Überwachungssignal zur Überwachung auf die Benutzung des Schnittstellenverbindungsmittels geschlossen und ein entsprechendes Überwachungssignal erzeugt.

Die erfindungsgemäße Aufgabe wird auch gelöst durch ein Überwachungssystem mit wenigstens einer Überwachungsvorrichtung der vorgenannten Art, welches dadurch gekennzeichnet ist, dass die Überwachungssignale und die weiteren Überwachungssignale der wenigstens einen Überwachungsvorrichtung durch Meldeleitungen an eine Meldeanlage übermittelbar sind, und dass durch die Meldeanlage bei Wegfall eines Überwachungssignals oder eines weiteren Überwachungssignals eine Alarmmeldung an einen vorbestimmten Empfänger erfolgt.

Auf die angegebene Weise ist ein Überwachungssystem auf besonders einfache Weise realisierbar. Häufig sind Datenverarbeitungsanlagen, bei denen ein Überwachungswunsch besteht, in besonders sensiblen Bereichen angeordnet, wie beispielsweise Industrieanlagen oder Kernkraftwerken. Oder die Art der Daten, die auf der Dampfbearbeitungsanlage gespeichert oder verarbeitet werden, sind datenschutztechnisch besonders sensibel oder geheim. Dann existiert oft bereits eine Meldeanlage, so dass die Überwachungssignale der erfindungsgemäßen Überwachungsvorrichtung auf die bereits existierende Meldeanlage einfach aufgeschaltet werden. Meldeanlagen sind in verschiedenen Ausgestaltungen, zum Beispiel Einbruchmeldeanlagen (EMA), allgemein bekannt. Solche Meldeanlagen überwachen eine Anzahl von Signalen von Überwachungsgeräten. Üblicherweise werden dabei aktive Signale der Überwachungsgeräte von der Meldeanlage detektiert. Solange ein Signal an der Meldeanlage ansteht, wird dies als normalen Betriebszustand interpretiert. Fällt das Signal aus irgendeinem Grund weg, wird das als Störung des Betriebszustandes interpretiert und ein entsprechender Alarm ausgelöst. Ein Alarm oder eine Alarmmeldung wird dann an einen vorbestimmten Empfänger, zum Beispiel eine Überwachungszentrale, eine Telefonzentrale, ein Überwachungsdienst oder ähnliches, geschickt. Dieser Empfänger veranlasst dann eine entsprechende Maßnahme zur Kontrolle und/oder Behebung der Störung. Es ist aber auch möglich, dass die Meldeanlage unmittelbar eine Handlung veranlasst, beispielsweise das Schließen von Türen, das Trennen von Computern vom Computernetzwerk oder die Aktivierung von sonstigen Sicherheitsmaßnahmen.

Weitere vorteilhafte Ausgestaltungsmöglichkeiten sind den weiteren abhängigen Ansprüchen zu entnehmen.

Anhand der in den Zeichnungen dargestellten Ausführungsbeispielen sollen der Erfindung, weitere Ausführungsformen und weitere Vorteile näher beschrieben werden.

Es zeigen:
- Fig. 1: ein Beispiel einer ersten Überwachungssystem,
- Fig. 2: ein Beispiel einer zweiten Überwachungsvorrichtung,
- Fig. 3: ein Beispiel eines ersten Adapters,
- Fig. 4: ein Beispiel eines zweiten Adapters und
- Fig. 5: ein Beispiel eines dritten Adapters.

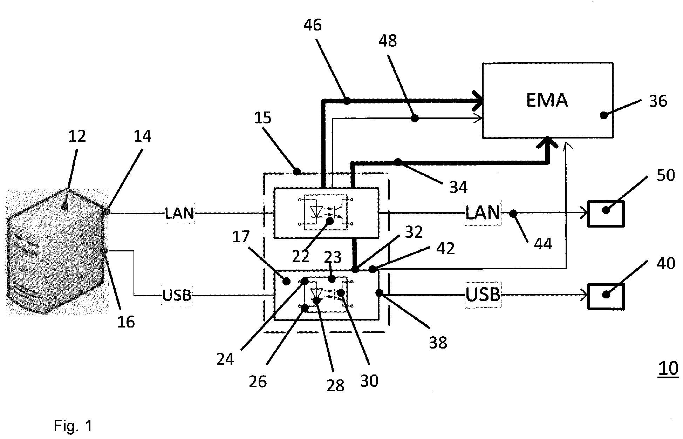

Die Fig. 1 zeigt ein erstes Überwachungssystem 10 zur Überwachung einer LAN- und einer USB-Schnittstelle als Kommunikationsschnittstellen eines Desktop-Computers 12 als Datenverarbeitungsgerät. Der Computer 12 ist dabei Teil eines Computernetzwerkes in einem Kernkraftwerk. Daher besteht ein besonderes Interesse das Computernetzwerk, den Computer 12, aber auch dessen Standard-Kommunikationsschnittstellen auf mögliche Manipulationen zu überwachen. Der Computer 12 weist eine LAN-Buchse 14 und eine USB-Buchse 16 als zu überwachende Kommunikationsschnittstellen auf. Ein in der Figur nicht dargestellter LAN-Stecker als Schnittstellenverbindungselement ist in die LAN-Buchse 14 eingesteckt und mit einem ersten Optokoppler 22 eines ersten Überwachungsvorrichtungsgehäuses 15 verbunden. Entsprechend ist ein in der Figur nicht gezeigter USB-Stecker als Schnittstellenverbindungselement des ersten Überwachungsvorrichtungsgehäuses 15 in die USB-Buchse 16 eingesteckt und mit einem zweiten Optokoppler 23 verbunden. Für die Schnittstellenverbindungselemente ist es dabei ohne Belang, ob Stecker, Buchsen oder andere Verbindungssysteme, beispielsweise Schraubverbindungen oder Klemmverbindungen eingesetzt werden. Die gewählten Schnittstellenverbindungsmittel sind lediglich exemplarisch aus dem Bereich der Verbindungsmittel für Computer gewählt.

Das erste Überwachungsvorrichtungsgehäuse 15 weist also je einen Optokoppler 22, 23 als Signalerzeugungselemente auf, deren Funktion im Folgenden anhand eines Optokopplers näher erläutert werden soll. Der zweite Optokoppler 23 hat eine erste Anschlussleitung 24, die mit einem entsprechenden Anschlusselement im USB-Stecker 20 verbunden ist, wobei dieses mit einer USB-Stromversorgungsleitung in der USB-Buchse 16 verbunden ist. Eine zweite Anschlussleitung 26 des zweiten Optokopplers 23 ist mit einem weiteren Anschlusselement im USB-Stecker verbunden, wobei dieses mit einer USB-Masseleitung in der USB-Buchse 16 verbunden ist. Die verschiedenen elektrischen Verbindungen zwischen dem USB Stecker und dem zweiten Optokoppler 23 bzw. weiteren Anschlüssen im Überwachungsvorrichtungsgehäuse 15 ist durch ein Verbindungskabel mit einer entsprechenden Anzahl Adern sichergestellt. Zwischen der ersten 24 und der zweiten Anschlussleitung 26 ist eine Fotodiode 28 angeordnet und elektrisch mit diesen verbunden. Wenn also eine entsprechende Spannung an der USB-Stromversorgurigsleitung anliegt, wird die Fotodiode 28 ein Licht emittieren. Das von der Fotodiode 28 ausgesandte Licht wird von einem Fototransistor 30 detektiert und in ein erstes elektrisches Signal als Überwachungssignal umgewandelt, das an der Ausgangsseite des Fototransistors 30 bereitgestellt ist. Das erste elektrische Signal der Ausgangsseite des Fototransistors 30 wird mit einer in der Figur nicht gezeigten Verbindungsleitung zu einer ersten Anschlussbuchse 32 geführt. Die erste Anschlussbuchse 32 ist mit einem Anschlussstecker mit einer ersten Meldeleitung 34 verbunden, deren anderes Ende an eine Einbruchsmeldeanlage (EMA) 36 angeschlossen ist. Im gewählten Beispiel ist die Einbruchsmeldeanlage 36 Teil eines Sicherheitssystems Kernkraftwerk, das weitere Systemteile hat, beispielsweise eine Telefonzentrale, eine Werkschutzzentrale und weitere Überwachungseinrichtungen.

In dem gezeigten Beispiel ist eine erste Überwachungsvorrichtung als Schnittstellenverlängerung der Standard-Kommunikationsschnittstellen des Computers 12 ausgeführt, d.h. zum Beispiel für die Überwachung der USB-Schnittstelle des Computer 12 die erste Überwachungsvorrichtung ein USB-Verbindungsmittel 38 aufweist, in die ein USB-Steckverbinder eines USB-Gerätes 40 eingesteckt ist. Als USB-Gerät kommen alle Geräte in Betracht, über eine Standard USB-Verbindung kommunizieren, beispielsweise eine Computermaus, ein USB-Dongle, USB-Speicher-Sticks, Massenspeicher mit USB-Anschluss, Drucker, um nur einige zu nennen. Dabei sind der USB-Stecker und das USB-Verbindungsmittel 38 so ausgestaltet, dass alle Standardleitungen, also die Signal- sowie die Stromleitungen - die Spannungsversorgungsleitung und die Masseleitung - des USB-Steckverbinders am USB-Verbindungsmittel 38 zur Verfügung stehen. Das USB-Gerät 40 ist signaltechnisch also genauso mit der USB-Buchse 16 verbunden, wie wenn dieses direkt in die USB Buchse 16 eingesteckt wäre. Das USB-Verbindungsmittel 38 wird dabei daraufhin überwacht, ob der USB-Steckverbinder des USB-Geräts 40 eingesteckt ist oder nicht. Im gezeigten Fall, nämlich dass der USB-Steckverbinder in dem USB-Verbindungsmittel 38 gerade eingesteckt ist, wird von einer Signalerzeugungsvorrichtung ein elektrisches Signal generiert und zu einer zweiten Anschlussbuchse 42 geleitet. Diese ist wiederum mit einer zweiten Meldeleitung 44 mit der zweiten Anschlussbuchse 42 verbunden, die ein an der zweiten Anschlussbuchse 42 anstehendes Signal wiederum zur Einbruchmeldeanlage 36 führt.

Die Überwachung auf eine Manipulation der Verwendung der LAN-Kommunikationsschnittstelle, also der die Überwachung der LAN-Buchse 14 des Computers 12, ist funktional vergleichbar der Überwachung der USB-Buchse 16 und auch vergleichbar aufgebaut, so dass auch diese Kommunikationsschnittstelle, die in einem im Betrieb befindlichen Zustand dargestellt ist, mit dem ersten Optokoppler 22 ein drittes Überwachungssignal generiert, das mit einer dritten Meldeleitung 46 zur Einbruchmeldeanlage 36 übermittelt ist. Auch bei der Überwachung der LAN-Buchse 14 ist die Verwendung eines LAN-Gerätes unter Zwischenschaltung der ersten Überwachungsvorrichtung vorgesehen. Dabei wird deren LAN-Verbindungsmittel als deren LAN-Ausgangsseite daraufhin überwacht, ob ein entsprechender LAN-Stecker eines LAN-Geräts 50 eingesteckt ist. In diesem Fall wird ein viertes Überwachungssignal generiert, welches mit einer vierten Meldeleitung 48 an die Einbruchsmeldeanlage 36 übermittelt wird. In dem gezeigten Beispiel weist die erste Überwachungsvorrichtung die Bauelemente, nämlich das erste Überwachungsvorrichtungsgehäuse 15, Verbindungsleitungen, USB-Stecker, LAN-Stecker, erster 22 und zweiter Optokoppler 23, USB- Verbindungsmittel 38, LAN-Verbindungsmittel, und Fototransistoren 30 auf, während das erste Überwachungssystem 10 neben der ersten Überwachungsvorrichtung, die erste bis vierte Meldeleitungen 34, 44, 46, 48 und die Einbruchmeldeanlage 36 aufweist.

Jedes Ausbleiben eines Überwachungssignals an den Meldeleitungen 34, 44, 46, 48 wird von der Einbruchmeldeanlage 36 detektiert. Eine entsprechende Alarmmeldung wird dann zum Beispiel optisch oder/und akustisch angezeigt, sowie gegebenenfalls an einen vorbestimmten Empfänger übermittelt. Der Empfänger kann zum Beispiel ein Nachrichtensystem, ein Mailsystem oder ein Telefonsystem sein, oder aber auch ein Alarmsystem eines Wachschutzes oder der Polizei.

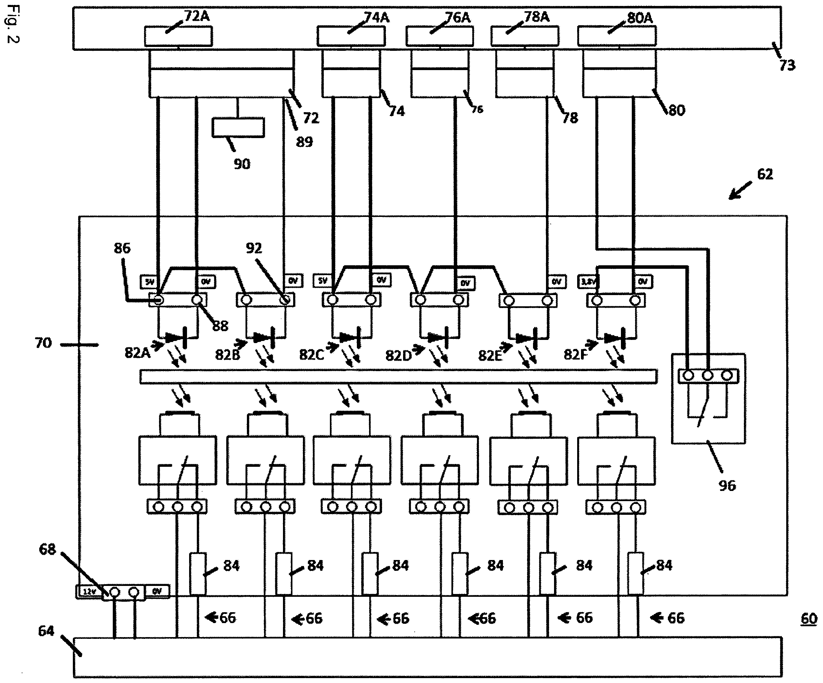

Die Fig. 2 zeigt ein zweites Überwachungssystem 60, dass eine zweite Überwachungsvorrichtung 62 und eine Meldeanlage 64 aufweist. Die Meldeanlage 64 ist dabei mit einer Anzahl von Meldelinien 66 mit einer entsprechenden Anzahl von Überwachungssignalanschlüssen der zweiten Überwachungsvorrichtung 62 verbunden. Die Meldelinien 66 sind als elektrische zweiadrige Leitungen ausgestaltet. Zudem stellt die Meldeanlage 64 eine 12 V Stromversorgung 68 mit einer 12 V Spannungsversorgungsleitungen und einer Masseleitung der zweiten Überwachungsvorrichtung 62 zur Verfügung.

Die zweite Überwachungsvorrichtung 62 weist eine Elektronikbox 70 und fünf Adapterelemente, nämlich ein erstes bis fünftes Adapterelement 72, 74, 76, 78, 80 auf. Dabei ist ein USB Stecker des ersten Adapterelements 72 in einen USB Port 72A als Kommunikationsschnittstelle eines zu überwachenden Datenverarbeitungsgerätes 73, hier ein Personal-Computers (PC), eingesteckt und derart mit diesem verbunden. Entsprechend ist das zweite Adapterelement 74 in einen USB Mini Port 74A, das dritte Adapterelement 76 in eine RS 232 Schnittstelle 76A, das vierte Adapterelement 78 eine LAN Schnittstelle 78A und schließlich das fünfte Adapterelement 80 in einen SD-Port 80A des Datenverarbeitungsgerätes 73 einsteckt. Jedes der Adapterelemente 72, 74, 76, 78, 80 ist mit wenigstens einem zweiten Optokoppler 82A-F elektrisch als Signalerzeugungselement verbunden. Dabei ist es mit jedem zweiten Optokoppler 82A-F ermöglicht ein Überwachungssignal zu generieren, wobei die Überwachungssignalseite bzw. Ausgangsseite des Optokopplers als Relais ausgestaltet ist, wobei an jedes Relais zwei Leitungen einer Meldelinie 66 der Meldeanlage 64 angeschlossen sind, wobei je eine der beiden Leitungen zudem noch einen Überwachungswiderstand 84 aufweist. Falls ein zweiter Optokoppler 82A-F kein Überwachungssignal mehr erzeugt, wird das betreffende Relais ab, so dass die beiden Leitungen der entsprechenden Meldelinie 66 elektrisch nicht mehr verbunden sind. Die Meldeanlage 64 erkennt diesen Zustand als Manipulation und wird eine entsprechende Alarmmeldung generieren.

Der zweite Optokoppler 82A des USB Ports 72A weist einen ersten Spannungsversorgungsanschluss 86 auf, der mittels einer elektrischen Leitung mit einem Stromversorgungs-Pin des USB-Steckers des ersten Adapterelements 72 verbunden ist. Ist das erste Adapterelement 72, wie in dieser Figur gezeigt, in den USB Port 72A des Datenverarbeitungsgerätes 73 eingesteckt, liegt am ersten Spannungsversorgungsanschluss 86 eine Spannung von 5 V an, was genau der Spannung des USB Ports 72A der Datenverarbeitungsgerätes 73 entspricht. Ein erster Masseanschluss 86 des zweiten Optokopplers 82A des USB Ports 72A ist mit einer weiteren elektrischen Leitung mit dem Masse-Pin des USB-Steckers verbunden. Entsprechend ist durch das Einstecken des USB Steckers in den USB Port 72A ein Masseanschluss des Optokopplers 82A des ersten Adapterelements 72 mit der Masse des Datenverarbeitungsgerätes 73 hergestellt. Der zweite Optokoppler 82A ist elektrisch zwischen dem ersten Spannungsversorgungsanschluss 86 und dem ersten Masseanschluss 88 zwischengeschaltet. Dem entsprechend ist durch den zweiten Optokoppler 82A ein Überwachungssignal erzeugt, das von der Meldeanlage 64 registriert wird. Sollte der USB Stecker aus dem USB Port 72A entfernt werden, wird im gezeigten Beispiel sowohl die Spannungsversorgung-, als auch die Masseverbindung zum PC unterbrochen. Entsprechend würde vom zweiten Optokoppler 82A auch kein Überwachungssignal mehr erzeugt. Die Meldeanlage 64 registriert den Signalausfall und wird, je nach Programmierung, eine Alarmmeldung absetzen oder andere programmgemäße Handlungen durchführen.

Das erste Adapterelement 72 weist noch einen USB-Verbinder 89 als USB Buchse zum Anschluss eines USB Gerätes, im gezeigten Beispiel eine USB-Maus 90, auf. Dabei ist das metallische Abschirmungselement des USB-Verbinders 89 mit einer Masseleitung verbunden, die an einen zweiten Massenanschluss 92 des zweiten Optokopplers 82B verbunden ist. Ein zweiter Spannungsversorgungsanschluss 94 ist zudem elektrisch mit dem ersten Spannungsversorgungsanschluss 86 verbunden, so dass auch der zweite Optokoppler 82B, der der USB Maus 90 zugeordnet ist, eine Spannungsversorgung aufweist, wenn das erste Adapterelement 72 in den USB Port 72A eingesteckt ist. Wird nun aus irgendeinem Grunde die Steckverbindung der USB Maus 90 aus dem USB-Verbinder 89 gezogen, ist der Masseschluss zwischen dem zweiten Masseanschluss und der Masse des USB Ports 72A unterbrochen, sodass der zweite Optokoppler 82B der USB Maus 90 kein Überwachungssignal mehr liefert. Ein entsprechendes Relais auf einer Sekundärseite des zweiten Optokoppler 82B Feld ab und unterbricht den entsprechenden Stromkreis zur Meldeanlage 64, so dass diese kein Überwachungssignal mehr hat. Auch in diesem Fall wird eine Alarmmeldung von der Meldeanlage 64 generiert. Das Beispiel mit dem USB Port 72A als Kommunikationsschnittstelle zeigt also ein Adapterelement, nämlich das erste Adapterelement 72, das zwischen den USB Port 72A und einem USB Gerät, nämlich der USB Maus 90 zwischengeschaltet ist, also ein Beispiel für einen USB Port 72A, der in Betrieb ist.

Die Beispiele des zweiten 74, bis dritten 76 sowie des vierten Adapterelements 78 sind Beispiele die Überwachung von Kommunikationsschnittstellen des Schnittstellen des Datenverarbeitungsgerätes 73, die nicht genutzt werden sollen. Dem entsprechend sind diese Adapterelemente 74, 76, 78 als Abschlusselemente ausgeführt, die keine Verbindungselemente für irgendwelche Geräte mit USB, RS232 oder LAN Verbindungen aufweisen. Die Besonderheiten dieser drei Adapterelemente 74, 76, 78 besteht darin, dass die Stromversorgungsanschlüsse der entsprechenden drei zweiten Optokoppler 82C, 832D, 82E miteinander verbunden sind und nur der Stromversorgungsanschluss des zweiten Optokopplers 82C mit der Stromversorgung des USB Mini Anschlusses der Datenvermeidungsanlage 73 verbunden ist, sodass die Spannungsversorgung dieser drei Adapterelemente 74, 76, 78 allein durch die Spannungsversorgung des USB Mini Anschlusses sichergestellt ist.

Das fünfte Adapterelement 80 ist als Abschlusselement für einen SD Anschluss des Datenverarbeitungsgeräts 73 vorgesehen. Die Besonderheit der Verbindung des fünften Adapterelements 80 und dem diesem zugeordneten zweiten Optokoppler 82 F ist, dass die Stromversorgungsleitung, zwischen dem fünften Adapterelement 80 und dem Spannungsversorgungsanschluss am zweiten Optokoppler 82F ein Abhebekontakt 96 zwischengeschaltet ist. Das Abhebekontakt 96 ist als Unterbrecher ausgestaltet und erkennt eine mögliche Manipulation der Elektronikbox 70. dazu ist zum Beispiel ein Kontaktelement des Abhebekontakts 96 mit einem Deckel der Elektronikbox 70 so verbunden, dass der elektrische Kontakt unterbrochen wird, sobald der Deckel von der Elektronikbox 70 abgenommen wird. Auf diese Weise ist ein Abheben des Deckels durch die Meldeanlage 64 erkennbar, da die Spannungsversorgung des zweiten Optokopplers 82F durch das Ableben des Deckels unterbrochen ist.

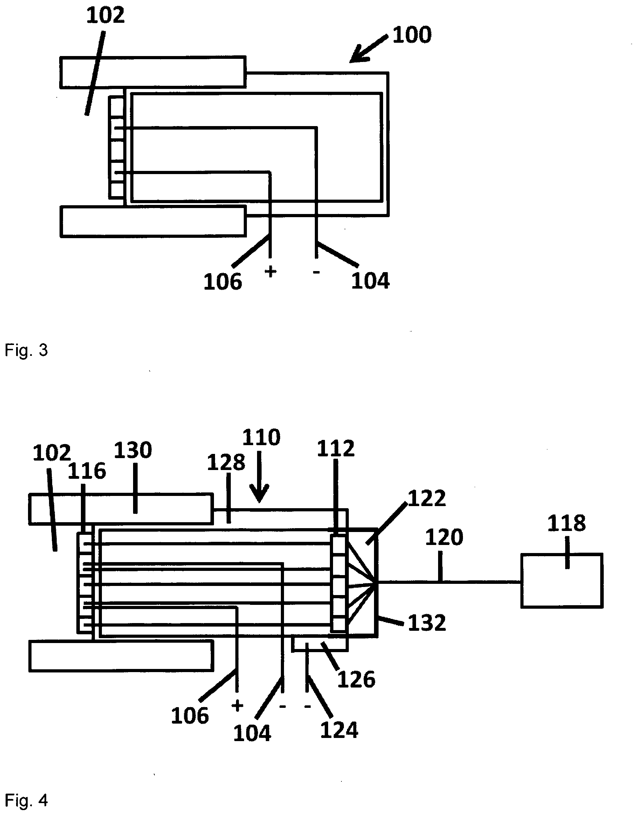

Die Fig. 3 zeigt einen ersten Adapter 100 als Adapterelement in einer schematischen Darstellung, der als Abschlusselement einer Standardkommunikationsschnittstelle 102 einer Datenbearbeitungsanlage vorgesehen ist. Dabei sind eine erste Leitung 104 sowie eine zweite Leitung 106 des ersten Adapters 100 einerseits mit der Masse bzw. der Spannungsversorgung der Standardkommunikationsschnittstelle 102 und andererseits mit den entsprechenden Anschlüssen an einem Signalerzeugungselement einer Überwachungsvorrichtung verbunden. Das Signal Erzeugungselement und die Überwachungsvorrichtung sind der Figur jedoch nicht dargestellt. Da der erste Adapter 100 in die Standardkommunikationsschnittstelle 102 eingesteckt ist, ist eine Benutzung dieser Schnittstelle durch andere Geräte nicht mehr möglich. Soll ein Gerät an diese Schnittstelle angeschlossen werden, muss zunächst der erste Adapter 100 aus der Schnittstelle entfernt werden, was sowohl die Spannungsversorgung, als auch die Masseverbindung zum Signalerzeugungselement unterbricht. Hierdurch ist dann verhindert, dass ein Überwachungssignal generiert wird, so dass das Fehlen dieses Überwachungssignal als Manipulation erkennbar ist.

Die Fig. 4 zeigt dieselbe Standardkommunikationsschnittstelle 102 in die ein zweiter Adapter 110 eingesteckt ist. Auch beim zweiten Adapter 110 sind die erste und die zweite Leitung 104, 106 vorgesehen, durch die das Herausziehen des zweiten Adapters 110 aus der Standardkommunikationsschnittstelle 102, wie oben beschrieben, detektierbar ist. Der zweite Adapter 110 weist zudem noch einen Stecker 112 auf, der mit einer Anzahl von Signalleitungen 114 mit einer Steckverbindung 116 der Standardkommunikationsschnittstelle 102 verbunden ist. Auf diese Weise ist ein Gerät 118 mittels eines Kabels 120 und einer daran angeschlossenen Buchse 122 signaltechnisch mit der Standardkommunikationsschnittstelle 102 verbunden. Der zweite Adapter 110 ist also zwischen die Buchse 122 und der Standardkommunikationsschnittstelle 102 zwischengefügt, ohne dass die signaltechnische Funktion für die Kommunikation zwischen dem Gerät 118 und der Standardkommunikationsschnittstelle 102 durch das Zwischenfügen beeinträchtigt wäre. Zudem weist der zweite Adapter 110 eine dritte Leitung 124 auf, die einerseits mit einem weiteren Signalerzeugungselement der Überwachungsvorrichtung und andererseits mit einer ersten Stirnseite 126 des zweiten Adapters 110 verbunden ist. Eine zweite Schirmseite 128 des zweiten Adapters 110 ist zudem mit einer Stimmung 130 der Standardkommunikationsschnittstelle 102 verbunden, die wiederum auf Masse gelegt ist. Das Herausziehen der Buchse 122 aus dem Stecker 112 dadurch überwacht, dass erst das elektrisch leitende Schirmelement 132 der Buchse 122 eine elektrische Verbindung zwischen der ersten 126 und der zweiten Schirmseite 128 ermöglicht. Erst dann ist eine vollständig elektrische Leitung zwischen der Schirmung 130 und der dritten Leitung 124 hergestellt. Dementsprechend wird die elektrische Leitung gebrochen, sollte die Buchse 122 aus dem Stecker 112 herausgezogen werden, was wiederum als Manipulation dieser Steckverbindung interpretierbar ist.

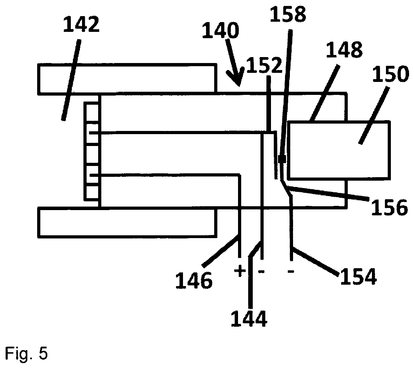

Die Fig. 5 zeigt einen dritten Adapter 140 als Adapterelement, der in eine standardisierte Kommunikationsschnittstelle 142 eingesteckt ist. Auch der dritte Adapter 140 weist eine vierte 144 sowie eine fünfte Leitung 146 auf, deren Funktionen denen der ersten und zweiten Leitung 104, 106 entspricht. Zudem hat der dritte Adapter 140 einen Slot 148 in dem eine Speicherkarte 150 eingesteckt ist. Der dritte Adapter 140 hat nämlich die Aufgabe, eine Manipulation der Kombinationsschnittstelle 142 durch Entfernen der Speicherkarte 150 zu überwachen. Hierfür weist die vierte Leitung 144 ein Verzweigungsstück 152 auf. Eine sechste Leitung 154, deren Funktion der der dritten Leitung 124 beim zweiten Adapter 110 entspricht, ist an ihrem zur Speicherkarte 150 weisenden Ende mit einem federnd nachgiebigen Abschnitt 156 versehen und am äußeren Ende dieses Abschnitts 156 als Kontaktstück 168 ausgestaltet. Durch das Einstecken der Speicherkarte 150 in den Slot 148 wird der federnd nachgiebige Abschnitt 156 so verformt, dass das Kontaktstück 158 gegen das Verzweigungsstück 152 gedrückt ist. Auf diese Weise ist eine elektrische Verbindung zwischen der sechsten Leitung 154 und der vierten Leitung 144 hergestellt. Letztlich hat dann ein Signalerzeugungselement, das an die sechste Leitung 154 angeschlossen ist, eine Verbindung mit der Masse der vierten Leitung 144 bzw. letztlich mit der Masse der Kommunikationsschnittstelle 142. Damit ist aber auch die Erzeugung eines Überwachungssignals gewährleistet. Entsprechend wird diese Verbindung zur Masse unterbrochen, wenn die Speicherkarte 150 aus dem Slot 148 herausgezogen ist, so dass die Verbindung zur Masse der Kombinationsschnittstelle 142 entfällt. Dem entsprechend ist auch kein Überwachungssignal mehr erzeugt, was einer Meldeanlage als Manipulation der Kumulationsschnittstelle 142 bzw. der Speicherkarte 150 interpretiert wird.

### Bezugszeichenliste

- 10: erstes Überwachungssystem
- 12: Computer
- 14: LAN-Buchse
- 15: erstes Überwachungsvorrichtungsgehäuse
- 16: USB-Buchse
- 22: erster Optokoppler
- 23: zweiter Optokoppler
- 24: erste Anschlussleitung
- 26: zweite Anschlussleitung
- 28: Fotodiode
- 30: Fototransistor
- 32: erste Anschlussbuchse
- 34: erste Meldeleitung
- 36: Einbruchmeldeanlage
- 38: USB-Verbindungsmittel
- 40: USB-Gerät
- 42: zweiter Anschlussbuchse
- 44: zweite Meldeleitung
- 46: dritte Meldeleitung
- 48: vierte Meldeleitung
- 50: LAN-Gerät
- 60: zweites Überwachungssystem
- 62: zweite Überwachungsvorrichtung
- 64: Meldeanlage
- 66: Meldelinien
- 68: 12 V Stromversorgung
- 70: Elektronikbox
- 72: erstes Adapterelement
- 72A: USB Port
- 73: Datenverarbeitungsgerät
- 74: zweites Adapterelement
- 74A: USB Mini Port
- 76: drittes Adapterelement
- 76A: RS 232 Schnittstelle
- 78: viertes Adapterelement
- 78A: LAN Schnittstelle
- 80: fünftes Adapterelement
- 80A: SD-Port
- 82A-F: zweite Optokoppler
- 84: Überwachungswiderstand
- 86: erster Spannungsversorgungsanschluss
- 88: erster Masseanschluss
- 89: USB-Verbinder
- 90: USB Maus
- 92: zweiter Masseanschluss
- 94: zweiter Spannungsversorgungsanschluss
- 96: Abhebekontakt
- 100: erste Adapter
- 102: Standardkommunikationsschnittstelle
- 104: erste Leitung
- 106: zweite Leitung
- 110: zweite Adapter
- 112: Stecker
- 114: Signalleitung
- 116: Steckverbindung
- 118: Gerät
- 120: Kabel
- 122: Buchse
- 124: dritte Leitung
- 126: erste Schirmseite
- 128: zweite Schirmseite
- 130: Abschirmung
- 140: dritter Adapter
- 142: Kommunikationsschnittstelle
- 144: vierte Leitung
- 146: fünfte Leitung
- 148: Slot
- 150: Speicherkarte
- 152: Verzweigungsstück
- 154: sechste Leitung
- 156: Abschnitt
- 158: Kontaktstück

## Patentansprüche

1. Überwachungsvorrichtung für wenigstens eine Kommunikationsschnittstelle eines Datenverarbeitungsgerätes, wobei für jede der wenigstens einen zu überwachenden Kommunikationsschnittstelle ein erster Spannungsversorgungsanschluss, ein Masseanschluss und ein Adapterelement mit einem Schnittstellenverbindungselement vorgesehen sind, wobei der Masseanschluss mit einem Masseanschlusselement im Schnittstellenverbindungselement elektrisch verbunden ist, wobei das Schnittstellenverbindungselement so ausgestaltet ist, dass das Masseanschlusselement mit der Masse der Kommunikationsschnittstelle verbunden ist, wenn das Schnittstellenverbindungselement in die dafür vorgesehen Kommunikationsschnittstelle eingesteckt ist, wobei
• zwischen dem Spannungsversorgungsanschluss und dem Masseanschluss ein Signalerzeugungselement zwischengeschaltet ist,
• dass durch das Signalerzeugungselement ein Überwachungssignal dann erzeugt ist, wenn eine Spannung am Spannungsversorgungsanschluss anliegt und das Schnittstellenverbindungselement in die Kommunikationsschnittstelle eingesteckt ist, und
• dass das Überwachungssignal an einem Überwachungssignalanschluss der überwachten Kommunikationsschnittstelle bereitgestellt ist.

2. Überwachungsvorrichtung nach Anspruch 1, **dadurch gekennzeichnet, dass** das Signalerzeugungselement eine Leuchtdiode oder ein Schallerzeuger ist, und dass das Überwachungssignal ein Schall- oder Lichtsignal ist.

3. Überwachungsvorrichtung nach Anspruch 1, **dadurch gekennzeichnet, dass** das Signalerzeugungselement ein Optokoppler (22) oder eine elektronisches Koppelelement ist, und dass das Überwachungssignal ein elektrisches Signal ist, das am ersten Überwachungssignalanschluss verfügbar ist.

4. Überwachungsvorrichtung nach einem der vorherigen Ansprüche, **dadurch gekennzeichnet, dass** der Spannungsversorgungsanschluss mit einem Spannungsanschlusselement im Schnittstellenverbindungselement elektrisch verbunden ist, und dass das Schnittstellenverbindungselement so ausgestaltet ist, dass das Spannungsanschlusselement mit der Spannungsversorgung der Kommunikationsschnittstelle verbunden ist, wenn das Schnittstellenverbindungselement in die dafür vorgesehen Kommunikationsschnittstelle eingesteckt ist.

5. Überwachungsvorrichtung nach einem der Ansprüche 1 bis 3, **dadurch gekennzeichnet, dass** der Spannungsversorgungsanschluss der zu überwachenden Kommunikationsschnittstelle mit einer externen Spannungsquelle, einer Batterie, oder einem Spannungsversorgungsgerät als Spannungsversorgung angeschlossen ist.

6. Überwachungsvorrichtung nach einem der Ansprüche 4 oder 5, **dadurch gekennzeichnet, dass** zwischen dem Spannungsversorgungsanschluss und der Spannungsversorgung ein Sabotageerkennungselement zwischengeschaltet ist.

7. Überwachungsvorrichtung nach Anspruch 6, **dadurch gekennzeichnet, dass** der erste Spannungsversorgungsanschluss, der Masseanschluss und das Signalerzeugungselement in einem Gehäuse angeordnet sind, und das Sabotageerkennungselement eine Abhebekontakt ist, durch den die Spannungsversorgung unterbrochen ist, wenn das überwachtes Gehäuse geöffnet ist.

8. Überwachungsvorrichtung nach einem der vorherigen Ansprüche, **dadurch gekennzeichnet, dass** das Schnittstellenverbindungselement ein Stecker oder eine Buchse einer USB-, einer LAN-, einer COM-, einer SD-, einer Firewire- oder einer MPI-Schnittstelle oder einer anderen Standardkommunikationsschnittstelle ist.

9. Überwachungsvorrichtung nach einem der vorherigen Ansprüche, **dadurch gekennzeichnet, dass** das Datenverarbeitungsgerät ein Steuerungsgerät, ein Personal Computer (12), ein Server oder eine andere Datenverarbeitungsanlage ist.

10. Überwachungsvorrichtung nach einem der vorherigen Ansprüche, **dadurch gekennzeichnet, dass** das Überwachungssignal nur erzeugbar ist, wenn die Spannung am Spannungsversorgungsanschluss wenigstens einen vorbestimmten Minimalwert aufweist oder die Spannung einen Wert innerhalb eines vorgebbaren Spannungsbereiches aufweist.

11. Überwachungsvorrichtung nach einem der vorherigen Ansprüche, **dadurch gekennzeichnet, dass** wenigstens zwei Kommunikationsschnittstellen überwachbar sind, dass der Spannungsversorgungsanschluss wenigstens einer zu überwachenden Kommunikationsschnittstelle eine Spannungsversorgung nach Anspruch 4 oder 5 aufweist, und dass der Spannungsversorgungsanschluss wenigstens einer anderen zu überwachenden Kommunikationsschnittstelle mit dem Spannungsversorgungsanschluss der Kommunikationsschnittstelle mit der Spannungsversorgung nach Anspruch 4 oder 5 elektrisch verbunden ist.

12. Überwachungsvorrichtung nach einem der vorherigen Ansprüche, **dadurch gekennzeichnet, dass** das Adapterelement ein Schnittstellenverbindungsmittel zum Anschluss eines Verbindungsstücks aufwiest,
dass das Schnittstellenverbindungsmittel mit dem Schnittstellenverbindungselement so verbunden ist, dass alle Signalleitungen der Kommunikationsschnittstelle, die Schirmung, die Masse und die Spannungsversorgung der Kommunikationsschnittstelle als Schnittstellenanschlüsse am Schnittstellenverbindungsmittel für das Verbindungsstück bereitgestellt sind,
dass ein weiteres Signalerzeugungselement zwischen dem Spannungsversorgungsanschluss und einem weiteren Masseanschluss zwischengeschaltet ist,
dass der weitere Masseanschluss mit einem weiteren Masseanschlusselement im Adapterelement elektrisch verbunden ist,
dass das Adapterelement so ausgestaltet ist, dass das weitere Masseanschlusselement mit der Masse oder der Schirmung der Kommunikationsschnittstelle nur dann verbunden ist, wenn das Schnittstellenverbindungselement in die dafür vorgesehen Kommunikationsschnittstelle und das Verbindungsstück in das Schnittstellenverbindungsmittel eingesteckt sind,
dass durch das weitere Signalerzeugungselement ein weiteres Überwachungssignal erzeugt ist, wenn eine Spannung am Spannungsversorgungsanschluss anliegt und das weitere Masseanschlusselement mit dem Masseanschlusselement oder der Schirmung des Adapterelements verbunden ist,
und dass das Überwachungssignal an einem weiteren Überwachungssignalanschluss der überwachten Kommunikationsschnittstelle bereitgestellt ist.

13. Überwachungsvorrichtung nach Anspruch 12, **dadurch gekennzeichnet, dass** das weitere Masseanschlusselement federnd nachgiebig ausgestaltet ist, dass das Einstecken des Verbindungsstücks in das Schnittstellenverbindungsmittel gegen die Federkräfte des weiteren Masseanschlusselement wirkt, und dass durch das vollständige Einstecken des Verbindungsstücks das weitere Masseanschlusselement so gespannt ist, dass das weitere Masseanschlusselement mit dem Masseanschlusselement oder der Schirmung des Adapterelements verbunden ist.

14. Überwachungssystem mit wenigstens einer Überwachungsvorrichtung nach einem der vorherigen Ansprüche, **dadurch gekennzeichnet, dass** die Überwachungssignale und die weiteren Überwachungssignale der wenigstens einen Überwachungsvorrichtung durch Meldeleitungen an eine Meldeanlage übermittelbar sind, und dass durch die Meldeanlage bei Wegfall eines Überwachungssignals oder eines weiteren Überwachungssignals eine Alarmmeldung an einen vorbestimmten Empfänger erfolgt.

## Claims

1. Monitoring device for at least one communication interface of a data processing apparatus, wherein a first voltage supply terminal, an earth terminal and an adaptor element having an interface connection element are provided for each of the at least one communication interface to be monitored, wherein the earth terminal is electrically connected to an earth terminal element in the interface connection element, wherein the interface connection element is configured such that the earth terminal element is connected to the earth of the communication interface when the interface connection element is plugged into the communication interface provided therefor, wherein
• a signal generating element is interposed between the voltage supply terminal and the earth terminal,
• in that a monitoring signal is generated by the signal generating element when a voltage is present at the voltage supply terminal and the interface connection element is plugged into the communication interface, and
• in that the monitoring signal is provided at a monitoring signal terminal of the monitored communication interface.

2. Monitoring device according to Claim 1, **characterized in that** the signal generating element is a light-emitting diode or a sound generator, and **in that** the monitoring signal is a sound or light signal.

3. Monitoring device according to Claim 1, **characterized in that** the signal generator element is an optocoupler (22) or an electronic coupling element, and **in that** the monitoring signal is an electrical signal available at the first monitoring signal terminal.

4. Monitoring device according to any of the preceding claims, **characterized in that** the voltage supply terminal is electrically connected to a voltage terminal element in the interface connection element, and **in that** the interface connection element is configured such that the voltage terminal element is connected to the voltage supply of the communication interface when the interface connection element is plugged into the communication interface provided therefor.

5. Monitoring device according to any of Claims 1 to 3, **characterized in that** the voltage supply terminal of the communication interface to be monitored is connected to an external voltage source, a battery, or a voltage supply apparatus as voltage supply.

6. Monitoring device according to either of Claims 4 and 5, **characterized in that** a sabotage identification element is interposed between the voltage supply terminal and the voltage supply.

7. Monitoring device according to Claim 6, **characterized in that** the first voltage supply terminal, the earth terminal and the signal generating element are arranged in a housing, and the sabotage identification element is a lift-off contact that interrupts the voltage supply if the monitored housing is opened.

8. Monitoring device according to any of the preceding claims, **characterized in that** the interface connection element is a plug or a socket of a USB interface, of a LAN interface, of a COM interface, of an SD interface, of a firewire interface or of an MPI interface or of some other standard communication interface.

9. Monitoring device according to any of the preceding claims, **characterized in that** the data processing apparatus is a control apparatus, a personal computer (12), a server or some other data processing system.

10. Monitoring device according to any of the preceding claims, **characterized in that** the monitoring signal is able to be generated only if the voltage at the voltage supply terminal has at least a predetermined minimum value or the voltage has a value within a predefinable voltage range.

11. Monitoring device according to any of the preceding claims, **characterized in that** at least two communication interfaces are able to be monitored, **in that** the voltage supply terminal of at least one communication interface to be monitored has a voltage supply according to Claim 4 or 5, and **in that** the voltage supply terminal of at least one other communication interface to be monitored is electrically connected to the voltage supply terminal of the communication interface having the voltage supply according to Claim 4 or 5.

12. Monitoring device according to any of the preceding claims, **characterized in that** the adaptor element has an interface connection means for connecting a connection piece,
**in that** the interface connection means is connected to the interface connection element such that all signal lines of the communication interface, the shield, the earth and the voltage supply of the communication interface are provided as interface terminals at the interface connection means for the connection piece,
**in that** a further signal generating element is interposed between the voltage supply terminal and a further earth terminal,
**in that** the further earth terminal is electrically connected to a further earth terminal element in the adaptor element,
**in that** the adaptor element is configured such that the further earth terminal element is connected to the earth or the shield of the communication interface only if the interface connection element is plugged into the communication interface provided therefor and the connection piece is plugged into the interface connection means,
**in that** a further monitoring signal is generated by the further signal generating element if a voltage is present at the voltage supply terminal and the further earth terminal element is connected to the earth terminal element or the shield of the adaptor element,
and **in that** the monitoring signal is provided at a further monitoring signal terminal of the monitored communication interface.

13. Monitoring device according to Claim 12, **characterized in that** the further earth terminal element is configured as resiliently compliant, **in that** plugging the connection piece into the interface connection means acts counter to the spring forces of the further earth terminal element, and **in that** as a result of the connection piece being plugged in completely, the further earth terminal element is tensioned such that the further earth terminal element is connected to the earth terminal element or the shield of the adaptor element.

14. Monitoring system comprising at least one monitoring device according to any of the preceding claims, **characterized in that** the monitoring signals and the further monitoring signals of the at least one monitoring device are able to be communicated to a signalling system by signalling lines, and **in that** an alarm is signalled to a predetermined receiver by the signalling system in the event of the cessation of a monitoring signal or of a further monitoring signal.

## Revendications

1. Dispositif de surveillance d'au moins une interface de communication d'un appareil de traitement de données, dans lequel, pour chacune de ladite ou desdites interfaces de communication à surveiller, il est prévu une première borne d'alimentation en tension, une borne de masse et un élément adaptateur comportant un élément de connexion d'interface, dans lequel la borne de masse est reliée électriquement à un élément de borne de masse dans l'élément de connexion d'interface, dans lequel l'élément de connexion d'interface est conçu de manière à ce que l'élément de borne de masse soit relié à la masse de l'interface de communication lorsque l'élément de connexion d'interface est enfiché dans l'interface de communication prévue à cet effet, dans lequel
• un élément générateur de signaux est connecté entre la borne d'alimentation en tension et la borne de masse,
• en ce qu'un signal de surveillance n'est généré par l'élément générateur de signaux que lorsqu'une tension est appliquée à la borne d'alimentation en tension et que l'élément de connexion d'interface est enfiché dans l'interface de communication, et
• en ce que le signal de surveillance est fourni à une borne de signal de surveillance de l'interface de communication surveillée.

2. Dispositif de surveillance selon la revendication 1, **caractérisé en ce que** l'élément générateur de signaux est une diode électroluminescente ou un générateur de son, et **en ce que** le signal de surveillance est un signal sonore ou lumineux.

3. Dispositif de surveillance selon la revendication 1, **caractérisé en ce que** l'élément générateur de signaux est un optocoupleur (22) ou un élément de couplage électronique, et **en ce que** le signal de surveillance est un signal électrique disponible sur la première borne de signal de surveillance.

4. Dispositif de surveillance selon l'une des revendications précédentes, **caractérisé en ce que** la borne d'alimentation en tension est reliée électriquement à un élément de borne de tension dans l'élément de connexion d'interface, et **en ce que** l'élément de connexion d'interface est conçu de manière à ce que l'élément de borne de tension soit relié à l'alimentation en tension de l'interface de communication lorsque l'élément de connexion d'interface est enfiché dans l'interface de communication prévue à cet effet.

5. Dispositif de surveillance selon l'une des revendications 1 à 3, **caractérisé en ce que** la borne d'alimentation en tension de l'interface de communication à surveiller est raccordée à une source de tension externe, à une batterie ou à un appareil d'alimentation en tension en tant qu'alimentation en tension.

6. Dispositif de surveillance selon l'une des revendications 4 ou 5, **caractérisé en ce qu'**un élément de détection de sabotage est connecté entre la borne d'alimentation en tension et l'alimentation en tension.

7. Dispositif de surveillance selon la revendication 6, **caractérisé en ce que** la première borne d'alimentation en tension, la borne de masse et l'élément générateur de signaux sont disposés dans un boîtier, et l'élément de détection de sabotage est un contact à soulèvement permettant d'interrompre l'alimentation en tension lorsque le boîtier surveillé est ouvert.

8. Dispositif de surveillance selon l'une des revendications précédentes, **caractérisé en ce que** l'élément de connexion d'interface est un connecteur ou une prise d'une interface USB, LAN, COM, SD, Firewire ou MPI ou d'une autre interface de communication normalisée.

9. Dispositif de surveillance selon l'une des revendications précédentes, **caractérisé en ce que** le dispositif de traitement de données est un appareil de commande, un ordinateur personnel (12), un serveur ou un autre équipement de traitement de données.

10. Dispositif de surveillance selon l'une des revendications précédentes, **caractérisé en ce que** le signal de surveillance ne peut être généré que lorsque la tension au niveau de la borne d'alimentation en tension présente au moins une valeur minimale prédéterminée ou lorsque la tension présente une valeur se situant à l'intérieur d'une plage de tension pouvant être prédéterminée.

11. Dispositif de surveillance selon l'une des revendications précédentes, **caractérisé en ce qu'**au moins deux interfaces de communication peuvent être surveillées, **en ce que** la borne d'alimentation en tension d'au moins une interface de communication à surveiller comporte une alimentation en tension selon la revendication 4 ou 5, et **en ce que** la borne d'alimentation en tension d'au moins une autre interface de communication à surveiller est reliée électriquement par la borne d'alimentation en tension de l'interface de communication à l'alimentation en tension selon la revendication 4 ou 5.

12. Dispositif de surveillance selon l'une des revendications précédentes, **caractérisé en ce que** l'élément adaptateur comporte un moyen de connexion d'interface permettant de raccorder une fiche de connexion,
**en ce que** le moyen de connexion d'interface est relié à l'élément de connexion d'interface de telle manière que toutes les lignes de signaux de l'interface de communication, le blindage, la masse et l'alimentation en tension de l'interface de communication soient prévus en tant que bornes d'interface sur le moyen de connexion d'interface pour la fiche de connexion,
**en ce qu'**un autre élément générateur de signaux est connecté entre la borne d'alimentation en tension et une autre borne de masse,
**en ce que** l'autre borne de masse est reliée électriquement à un autre élément de borne de masse dans l'élément adaptateur,
**en ce que** l'élément adaptateur est conçu de manière à ce que l'autre élément de borne de masse ne soit relié à la masse ou au blindage de l'interface de communication que lorsque l'élément de connexion d'interface est enfiché dans l'interface de communication prévue à cet effet et lorsque la fiche de connexion est enfichée dans le connecteur d'interface,
**en ce qu'**un autre signal de surveillance est généré par l'autre élément générateur de signaux lorsqu'une tension est appliquée à la borne d'alimentation en tension et lorsque l'autre élément de borne de masse est relié à l'élément de borne de masse ou au blindage de l'élément adaptateur,
et **en ce que** le signal de surveillance est fourni à une autre borne de signal de surveillance de l'interface de communication surveillée.

13. Dispositif de surveillance selon la revendication 12, **caractérisé en ce que** l'autre élément de borne de masse est conçu de manière élastiquement déformable, **en ce que** l'enfichage de la fiche de connexion dans le moyen de connexion d'interface agit contre les forces élastiques de l'autre élément de connexion de masse, et **en ce que** l'autre élément de borne de masse est soumis à une contrainte de telle, du fait de l'enfichage complet de la fiche de connexion, que l'autre élément de borne de masse est relié à l'élément de borne de masse ou au blindage de l'élément adaptateur.

14. Système de surveillance comportant au moins un dispositif de surveillance selon l'une des revendications précédentes, **caractérisé en ce que** les signaux de surveillance et les autres signaux de surveillance dudit au moins un dispositif de surveillance peuvent être transmis à un équipement de signalisation par l'intermédiaire de lignes de signalisation, et **en ce qu'**en cas d'absence d'un signal de surveillance ou d'un autre signal de surveillance, un message d'alarme est envoyé par l'équipement de signalisation à un récepteur prédéterminé.
